# EUROPÄISCHE PATENTANMELDUNG

(11) **EP 1 388 998 A1**
(43) Veröffentlichungstag der Anmeldung: **11.02.2004**
(21) Anmeldenummer: 03007693.9
(22) Anmeldetag: 03.04.2003
(51) Int. Cl.: H04M 7/00

(54) **Verfahren und Netzzugangsknoten zur Übertragung von modulierten Trägersignalen in paketorientierten Kommunikationsnetzen**

(71) Anmelder: SIEMENS AKTIENGESELLSCHAFT, 80333 München (DE)
(72) Erfinder: Knöbl, Karl, 1210 Wien (AT); Kreuter, Rüdiger, 81543 München (DE); Leirich, Rita, 81241 München (DE); Pauls, Markus, 81476 München (DE); Pichlmair, Egid, 85461 Bockhorn (DE); Schneiders, Gregor, 81477 München (DE)

(57) **Zusammenfassung**

Paketorientierte Sprachnetze (N), auch Voice over IP, VoIP Netze genannt, ersetzen oder ergänzen in zunehmendem Maße herkömmliche leitungsvermittelnde Sprachnetze. Zur Datenübermittlung über einen Nutzkanal (NV) kommen verschiedene Codierverfahren, genannt Codecs, zum Einsatz. Es sind Codecs mit niedrigen und höheren Bitraten bekannt. Niederbitratige komprimierende Codecs sind in der Regel nicht transparent für die Übertragung von Fax/Modemsignalen. Nutzkanäle (NV), für die Codecs mit niedrigen Bitraten vorgesehen sind, müssen für Fax/Modemverbindungen auf einen Codec mit höherer Bitrate umgeschaltet werden. Für H.323-gesteuerte Media Gateways (MG-A,MG-B) existiert kein praktikables Verfahren zur Codecumschaltung. Die vorliegende Erfindung sieht daher ein Verfahren zur Übertragung von modulierten Trägersignalen in paketorientierten Kommunikationsnetzen (N) zwischen einem ersten Gerät (A) und einem zweiten Gerät (B) vor, bei dem durch einen ersten der Media Gateways (MG-A,MG-B) unmittelbar ansprechend auf das Erkennen eines vom ersten Gerät (A) mit der Verbindungsanforderung übertragenen Signalisierungstones die Verbindungsanforderung zur Übertragung von modulierten Trägersignalen an einen dem ersten Netzzugangsknoten (MG-A,MG-B) zugeordneten Steuerelement (MGC-A,MGC-B) signalisiert wird. Durch dieses Steuerelement (MGC-A,MGC-B) wird ein signalerhaltendes Codierverfahren mit höherer Bitrate für die zu erstellende Verbindung (NV) zwischen den Netzzugangsknoten (MG-A,MG-B) ausgewählt und zumindest an den ersten Netzzugangsknoten (MG-A,MG-B) signalisiert.

## Beschreibung

Paketorientierte Sprachnetze, auch Voice over Packet VoP Netze genannt, ersetzen oder ergänzen in zunehmendem Maße herkömmliche leitungsvermittelnde Sprachnetze. Gleichzeitig verschmelzen bislang getrennte, dedizierte Netze zur Datenübertragung und Sprachübertragung zu einem einzigen Netz, welches häufig konvergentes Netz oder Netzwerk der nächsten Generation (NGN = Next Generation Network) genannt wird.

Als Netzzugangseinheiten für Nutzer der Kommunikationsnetze dienen dabei sogenannte Media Gateways, die in Verbindung mit den Teilnehmerendgeräten einerseits und dem restlichen Netzwerk andererseits stehen. Media Gateways in ihrer allgemeinsten Form sind an einer Netzgrenze angeordnet und ermöglichen den Übergang von außerhalb des betrachteten Netzes in dieses Netz. Media Gateways können so auch der Verbindung von Netzen dienen.

In Kommunikationsnetzen der betrachteten Art wird häufig zwischen Signalisierungsinformation und Nutzinformation unterschieden. Signalisierungsinformationen betreffen beispielsweise Aufbau, Abbau und weitere Steuerungsvorgänge einer Verbindung, wobei über die Verbindung die Nutzinformationen beispielsweise zwischen zwei Teilnehmern übertragen werden.

Die Netzzugangseinheiten sind daher meist mit zwei zumindest logisch verschiedenen Subnetzen des Kommunikationsnetzes verbunden, dem Subnetz für Signalisierung und dem Subnetz für Nutzinformationen. Besteht eine Verbindung im Subnetz für Nutzinformationen, wird diese häufig Nutzkanal oder Bearer Channel genannt.

Zur Datenübermittlung über einen Nutzkanal kommen verschiedene Codierverfahren zum Einsatz, die unterschiedlichen Zwecken dienen. Diese Codierverfahren werden häufig Codec (Coder/Decoder) genannt, da in der Regel sowohl die Codierfunktion als auch die Decodierfunktion im gleichen Regelwerk definiert und in einer (Hardware)Einheit realisiert sind.

Eine wichtige Aufgabe der Codecs für Sprachübertragung besteht darin, die ursprünglich kontinuierlichen Sprachsignale an den Paketcharakter des Netzwerkes anzupassen. Weitere Aufgaben der Codecs umfassen Komprimierung zur optimalen Ausnutzung der Bandbreite des Nutzkanals, Hinzufügen von Informationen für Fehlerkorrektur usw.

Solche Codecs sind beispielsweise von der International Telecommunication Union ITU in folgenden Standards spezifiziert: G.711 (unkomprimierte Pulscodemodulation PCM), G.726 (Adaptive differentielle PCM), G.723.1 (Multipulse Maximum Likelihood Quantization MP-MLQ sowie Algebraic-Code-Excited Linear-Prediction ACELP) und G.729 (Conjugate-Structure Algebraic-Code-Excited Linear-Prediction CS-ACELP). Diese Codecs werden vorwiegend in Festnetzen eingesetzt.

Weitere Codecs umfassen Codecs für Mobilfunkanwendungen. Von besonderer Bedeutung sind beispielsweise die vom GSM Certification Forum spezifizierten GSM-Codecs Full Rate FR, Enhanced Full Rate EFR und Adaptive Multi-Rate AMR.

Die einzelnen Codecs unterscheiden sich nicht nur in der für die Übertragung benötigten Bandbreite, sondern auch in der erreichbaren Sprachqualität und in ihrer Fähigkeit zur transparenten Übertragung von Faxsignalen und Modemsignalen.

Insbesondere tritt bei Codecs mit niedrigen Bitraten, beispielsweise komprimierende Codecs, das Problem auf, daß beispielsweise eine Übertragung von Fax- oder Modemsignalen mit solchen Codecs fehlschlägt, da die durch Faxgeräte und Modems verwendeten Verfahren zur (Kanal)Codierung einen herkömmlichen Sprachkanal mit voller Bandbreite voraussetzen.

In der Regel schlägt bereits der Verbindungsaufbau für Faxoder Modemverbindungen fehl, wenn für den Nutzkanal Codecs mit niedrigen Bitraten eingesetzt werden, da die Protokollaushandlung zwischen den Endgeräten behindert wird. Im Ergebnis führt dies für Fax- oder Modemverbindungen zu einer hohen Zahl nicht zustandekommender Verbindungen, d.h. zu einer hohen Call Failure Rate.

Dieses Problem kann gelöst werden, indem für den Nutzkanal, für den ein Codec mit niedriger Bitrate vorgesehen ist, bei Erkennen einer Fax- oder Modemverbindung auf einen Codec mit höherer Bitrate, beispielsweise G.711 oder G.726 mit einer Bitrate von 32 kbit/s oder höher, umgeschaltet wird.

Die Erkennung einer Fax- oder Modemverbindung kann beispielsweise anhand eines 2100 Hz Tons erfolgen, der üblicherweise zu Beginn einer Fax- oder Modemverbindung von dem verbindungsanfordernden Gerät übertragen wird.

Eine solche Umschaltung wird jedoch bislang nicht durch die Media Gateways selbst veranlaßt, sondern durch ein oder mehrere die Gateways steuernde Steuerungselemente, die als Media Gateway Controller bekannt sind.

Verschiedene Steuerprotokolle zur Verbindung von Media Gateway Controller und Media Gateways sind in der Technik bekannt, beispielsweise das Media Gateway Control Protocol MGCP, Media Gateway Control MEGACO und ITU-T H.323.

Die genannten Steuerprotokolle und die entsprechenden Media Gateways sehen folgenden Ablauf bei Erkennung einer Fax- oder Modemverbindungsanforderung vor:
- Der Media Gateway signalisiert an den steuernden Media Gateway Controller mit einer Verzögerung von bis zu 4 Sekunden, daß eine Fax- oder Modemverbindung erkannt wurde. Dabei wird die Art der Verbindung (Fax oder Modem) erkannt und signalisiert.
- Der Media Gateway Controller signalisiert an den Media Gateway (und ggf. in Vorwärtsrichtung der angeforderten Verbindung an weitere Media Gateway Controller und/oder Media Gateways) die Verwendung eines geeigneten Codec und weitere Einstellungen, z.B. bezüglich der für Sprachverbindungen notwendigen und bei Fax- oder Modemverbindungen fallweise unerwünschten Echosperren.

Die Gesamtverzögerung für die Signalisierung der korrekten Einstellungen von den Media Gateway Controllern an die Media Gateways bezüglich zu verwendenden Einstellungen, beispielsweise hinsichtlich Codec und Echosperren, kann damit mehr als 4 Sekunden betragen.

In dieser Zeit ist jedoch der Nutzkanal nicht transparent für die von Faxgeräten und Modems verwendeten Frequenzen, wodurch die Protokollaushandlung zwischen den Endgeräten trotz erfolgender Umschaltung des Codecs fehlschlägt.

Media Gateways, die gemäß MGCP oder MEGACO arbeiten, wurden daher um die Fähigkeit erweitert, äutonom und unmittelbar nach Detektierung der Fax- oder Modemverbindungsanforderung, d.h. ohne Steuerung durch den Media Gateway Controller und unter Vermeidung der durch die Steuerung hervorgerufenen Verzögerung, eine Codecumschaltung vorzunehmen. Der restliche Ablauf bleibt dabei unverändert.

Für Media Gateways und Media Gateway Controller, die gemäß des Steuerungsprotokolls H.323 arbeiten, besteht allerdings das Problem, daß eine entsprechende autonome Codecumschaltung nicht realisiert werden kann. Daher kann für derartige Media Gateways kein wirtschaftliches, komprimierendes Codierverfahren eingesetzt werden. Die Codecauswahl ist vielmehr auf nicht-komprimierende Codecs wie G.711 beschränkt, sofern den Teilnehmern das Merkmal Fax- oder Modemverbindung zur Verfügung stehen soll.

Es ist eine Aufgabe der vorliegenden Erfindung, ein Verfahren und einen Netzzugangsknoten anzugeben, das/der den Einsatz komprimierender Codierverfahren für Nutzverbindungen in H.323 Gateways ohne Einschränkungen hinsichtlich Fax- oder Modemverbindungen erlaubt.

Diese Aufgabe wird durch ein erfindungsgemäßes Verfahren zur Übertragung von modulierten Trägersignalen in paketorientierten Kommunikationsnetzen zwischen einem ersten Gerät und einem zweiten Gerät gelöst. Die Geräte sind jeweils mit Netzzugangsknoten verbunden. Die Netzzugangsknoten werden durch Steuerelemente gesteuert. Zur Übertragung zwischen den Netzzugangsknoten werden alternativ zumindest ein signalverfälschendes Codierverfahren und zumindest ein signalerhaltendes Codierverfahren eingesetzt. Das Verfahren sieht vor, daß in einem ersten Schritt eine Verbindung zur Übertragung von modulierten Trägersignalen durch das erste Gerät zum zweiten Gerät angefordert wird. In einem zweiten Schritt wird durch einen ersten der Netzzugangsknoten unmittelbar ansprechend auf das Erkennen eines vom ersten Gerät mit der Verbindungsanforderung übertragenen Signalisierungstones die Verbindungsanforderung zur Übertragung von modulierten Trägersignalen an einen dem ersten Netzzugangsknoten zugeordneten Steuerelement signalisiert. In einem dritten Schritt wird durch das dem ersten Netzzugangsknoten zugeordneten Steuerelement das signalerhaltende Codierverfahren für die zu erstellende Verbindung zwischen den Netzzugangsknoten ausgewählt und zumindest an den ersten Netzzugangsknoten signalisiert.

Die vorliegende Erfindung sieht ferner einen verbesserten Netzzugangsknoten eines paketorientierten Kommunikationsnetzes vor, über den ein Gerät Anschluß an das Kommunikationsnetz erhält und der durch ein Steuerelement gesteuert wird. Zur Übertragung zwischen dem Netzzugangsknoten und dem Kommunikationsnetz werden zumindest ein signalverfälschendes Codierverfahren und zumindest ein signalerhaltendes Codierverfahren alternativ eingesetzt. Der Netzzugangknoten weist Mittel zum Erkennen einer Verbindungsanforderung des Gerätes anhand eines übertragenen Signalisierungstones auf. Der Netzzugangknoten weist außerdem Mittel zum unmittelbaren Signalisieren der Verbindungsanforderung zur Übertragung von modulierten Trägersignalen an das Steuerelement auf. Der Netzzugangsknoten weist ferner Mittel zum Bestimmen der Art des Gerätes anhand des Signalisierungstones und Mittel zum Festlegen von Eigenschaften der Verbindung auf.

Ein wichtiger Vorteil der Erfindung besteht darin, Verbindungen zur Übertragung modulierter Trägersignale, beispielsweise Fax- oder Modemverbindungen, auch dann zu ermöglichen, wenn die Geräte über mittels unterschiedlicher Steuerungsprotokolle (MGCP, MEGACO, H.323) gesteuerte Media Gateways an das Netz angeschlossen werden und die Media Gateways für den Transport von Sprache signalverfälschende Codecs mit niedrigen Bitraten verwenden.

Dies ist insofern ein Vorteil, da Codecs mit niedrigen Bitraten, die für den Transport von Sprache eingesetzt werden, oft erheblich niedrigere Datenraten vorsehen und so den Einsatz kostengünstigerer Übertragungsnetze erlauben. Die Erfindung ermöglicht den Einsatz dieser Codecs mit niedrigen Bitraten und sieht ein Umschalteverfahren auf einen signalerhaltenden Codec mit höherer Bitrate für den Fall vor, daß für das Funktionieren eines Gerätes ein Codec mit höherer Bitrate erforderlich ist.

Der Konfigurationsaufwand bezüglich des Kommunikationsnetzes sinkt in vorteilhafter Weise, da die Konfiguration der Media Gateways und der verwendeten Codecs unabhängig davon erfolgen kann, ob ein Teilnehmer Faxgeräte oder Modems einsetzt.

Durch die Erfindung wird für die Übertragung der beispielsweise bei Faxverbindungen und Modemverbindungen erzeugten modulierten Trägersignale ein Nutzkanal bereitgestellt, dessen Codec die von den Faxgeräten oder Modemgeräten verwendete Codierung nicht verfälscht und somit eine ungestörte Faxverbindung/Modemverbindung zuläßt. Natürlich ist die Erfindung dabei nicht auf den Anwendungsfall Fax oder Modem beschränkt, sondern im Zusammenhang mit jedem Gerät, das einen Nutzkanal mit einer definierten Bandbreite zur ungestörten Übertragung von modulierten Trägersignalen voraussetzt, vorteilhaft einsetzbar.

Im folgenden werden Ausführungsbeispiele der Erfindung im Zusammenhang mit zwei Zeichnungen näher erläutert.
Figur 1 zeigt eine beispielhafte Netzwerkkonfiguration.
Figur 2A zeigt ein Nachrichtenflußdiagramm für zwei MGCP-gesteuerte Media Gateways.
Figuren 2B und 2C zeigen zwei Nachrichtenflußdiagramme für zwei Fälle des Interworking zwischen einem MGCP-gesteuerten Media Gateway und einem H.323-gesteuerten Media Gateway.

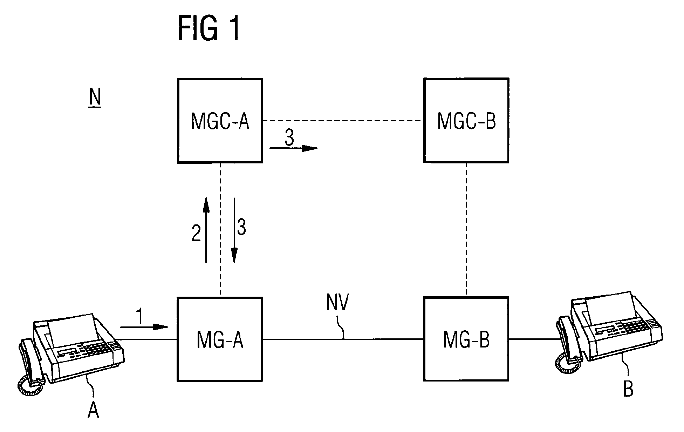

In Figur 1 ist ein erstes Gerät A dargestellt. Dieses ist mit einem ersten Netzzugangsknoten MG-A verbunden. Der Netzzugangsknoten MG-A wird gesteuert durch ein erstes Steuerelement MGC-A und ist über ein Kommunikationsnetz N verbunden mit einem zweiten Netzzugangsknoten MG-B. Dem zweiten Netzzugangsknoten MG-B sind ein zweites Steuerelement MGC-B und ein zweites Gerät B zugeordnet.

Die Geräte A, B können Endgeräte, insbesondere Faxgeräte oder Modemgeräte, sein. Die Netzzugangsknoten MG-A, MG-B können Media Gateways sein. Die Steuerelemente können Media Gateway Controller MGC-A, MGC-B sein. Weitere, nicht dargestellte Elemente können der schematisch dargestellten Verbindung der genannten Elemente dienen. Es ist ferner möglich, daß die beiden Steuerelemente nur logisch in zwei Steuerelemente aufgeteilt sind und in einem einzigen Gerät implementiert sind. Eine weitere bekannte Variante besteht darin, beide Netzzugangsknoten durch ein einziges Steuerelement zu steuern - nicht dargestellt.

Zur Steuerung der Netzzugangsknoten MG-A, MG-B durch die Steuerungselemente MGC-A, MGC-B wird ein geeignetes Protokoll eingesetzt. Dabei kann es sich beispielsweise um eines der Protokolle H.323, MGCP oder MEGACO handeln. Beide Netzzugangsknoten MG-A, MG-B können dabei durch ein einheitliches oder durch verschiedene Protokolle gesteuert sein.

Zwischen den beiden Netzzugangselementen MG-A, MG-B ist schematisch ein Nutzkanal NV dargestellt. Über diesen werden, nachdem der Nutzkanal durch entsprechende Signalisierungsvorgänge (1) bis (3) etabliert wurde, Nutzinformationen zwischen den Endgeräten A, B übertragen. Für die Übertragung auf dem Nutzkanal stehen mindestens ein signalerhaltender und mindestens ein signalverfälschender Codec zur Verfügung.

Ferner ist mit gestrichelter Linie ein Signalisierungsweg dargestellt, über den Signalisierungsinformationen bezüglich des Nutzkanals NV und weiterer, nicht dargestellter Nutzkanäle ausgetauscht werden.

Ein Beispiel für eine Ausführung des erfindungsgemäßen Verfahrens ist in Figur 1 durch die Schritte (1) bis (3) eingetragen.

In Schritt (1) fordert das erste Endgerät A eine Verbindung zum Übertragen von modulierten Trägersignalen zum zweiten Endgerät B an.

In Schritt (2) wird durch einen der Netzzugangsknoten MG-A oder MG-B unmittelbar ansprechend auf das Erkennen eines vom ersten Endgerät A mit der Verbindungsanforderung (1) übertragenen Signalisierungstones die Verbindungsanforderung zur Übertragung von modulierten Trägersignalen an das zugeordnete Steuerelement MGC-A, MGC-B signalisiert. Im Gegensatz zu bekannten Verfahren erfolgt dabei die Signalisierung unmittelbar nach Erkennen des Signalisierungstones an sich; die Auswertung des Verbindungstyps anhand der Phaseninformation erfolgt später.

Durch Schritt (2) wird Schritt (3) insofern vorteilhaft vorbereitet, als daß für Protokolle, die ein autonomes Handeln der Netzzugangsknoten MG-A, MG-B bezüglich der Auswahl eines Codec nicht vorsehen, die für eine Entscheidung notwendigen Informationen unverzögert an das Steuerelement weitergeleitet werden. Ein solches Protokoll ist beispielsweise H.323.

In Schritt (3) wird durch das genannte Steuerelement MGC-A, MGC-B das signalerhaltende Codierverfahren für die zu erstellende Verbindung NV zwischen den Netzzugangsknoten MG-A, MG-B ausgewählt, wenn in Schritt (2) eine entsprechende Verbindungsanforderung detektiert wurde, und zumindest an den eigenen Netzzugangsknoten MG-A, MG-B signalisiert.

Das Codierverfahren kann außerdem an weitere Netzzugangsknoten MG-B signalisiert werden.

Anschließend an Schritt (3) können weitere Eigenschaften der Verbindung festgelegt werden. Dazu kann aus der Phaseninformation des Signalisierungstones abgeleitet werden, ob es sich bei dem verbindungsanfordernden Endgerät A beispielsweise um ein Faxgerät oder ein Modem handelt. Entsprechend des detektierten Endgerätes kann dann durch die Netzzugangsknoten MG-A, MG-B ohne Steuerung der Steuerelemente MGC-A, MGC-B beispielsweise die Einstellung der in den Netzzugangsknoten MG-A, MG-B vorgesehenen Echosperren erfolgen.

Zusammenfassend werden in einem Ausführungsbeispiel der Erfindung die mittels MGCP, MEGACO oder H.323 gesteuerten Media Gateways MG-A, MG-B so modifiziert, daß ein Media Gateway Controller MGC-A, MGC-B sofort nach Erscheinen des Fax/Modem-Signalisierungstones (z.B. 1100 Hz CNG Ton gemäß ITU Standard T.30 oder 2100 Hz) über eine angeforderte Fax- oder Mödemverbindung informiert wird. Die Media Gateways MG-A, MG-B unterscheiden dabei nicht zwischen Fax- oder Modemverbindung. Die Mediä Gateway Controller MGC-A, MG-B schalten den eigenen Media Gateway oder alle beteiligten Media Gateways MG-A, MG-B auf einen Codec mit niedriger Bitrate um. Die Echosperren werden von den Media Gateways MG-A, MG-B autonom aufgrund von Phasensprüngen im Fax/Modem-Signalisierungston auf dem Nutzkanal NV eingestellt. Die Media Gateway Controller steuern mithin lediglich ein Umschalten auf einen Codec mit niedriger Bitrate, eine Steuerung der Echosperren erfolgt durch die Media Gateway Controller hingegen nicht.

Mittels MGCP oder MEGACO gesteuerte Media Gateways können, wie bekannt, parallel zu einer etwaigen Signalisierung autonom auf den nichtkomprimierenden Codec umschalten. Dabei können kleineren Paketverluste auftreten, was jedoch keine weiteren Nachteile hat. Dafür tritt ein verbessertes Umschalteverhalten in dem Fall auf, in dem kein H.323 Media Gateway an der Verbindung beteiligt ist.

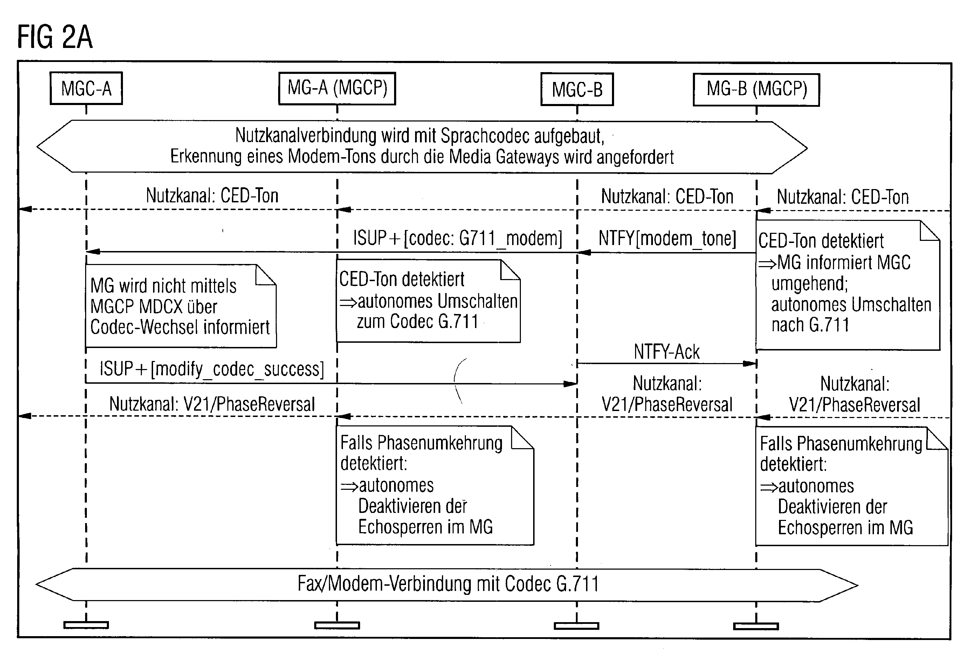

Im folgenden wird auf Figuren 2A-C Bezug genommen. Figuren 2A-C stellen den Signalfluß für verschiedene Situationen dar, die in einem Netzwerk mit durch verschiedene Protokolle gesteuerten Media Gateways MG-A, MG-B auftreten können.

Im Fall von Figur 2A ist dabei der Signalfluß beim Zusammenwirken von zwei MGCP-gesteuerten Media Gateways schematisch dargestellt.

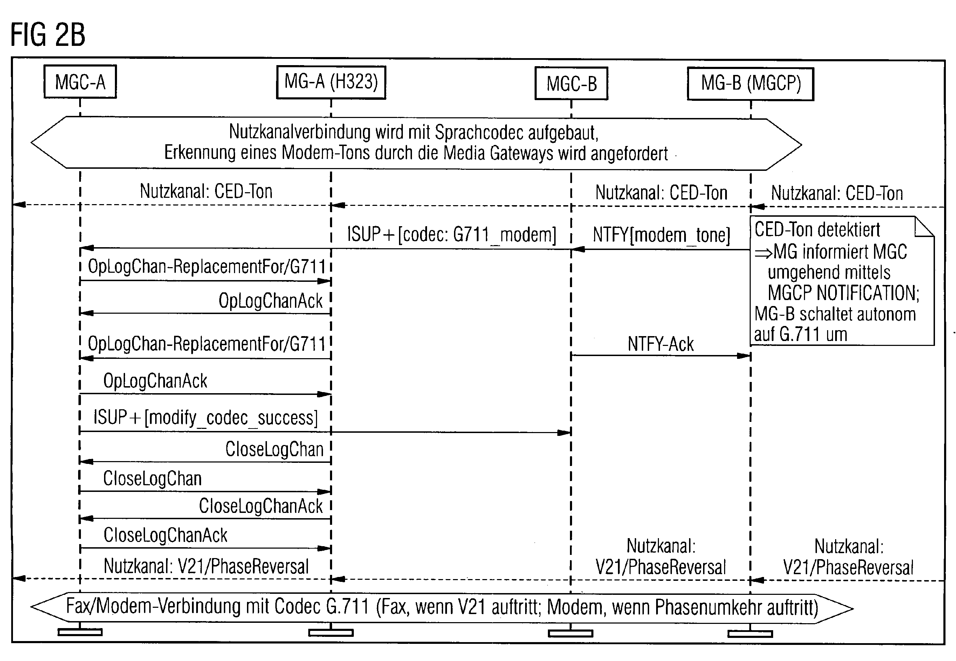

In Figur 2B ist der Signalfluß für den Fall dargestellt, daß ein H.323-gesteuerter Media Gateway MG-A mit einem MGCP-gesteuerten Media Gateway MG-B zusammenwirkt, wobei die Erkennung des Signalisierungstones durch den MGCP-gesteuerten Gateway MG-B erfolgt.

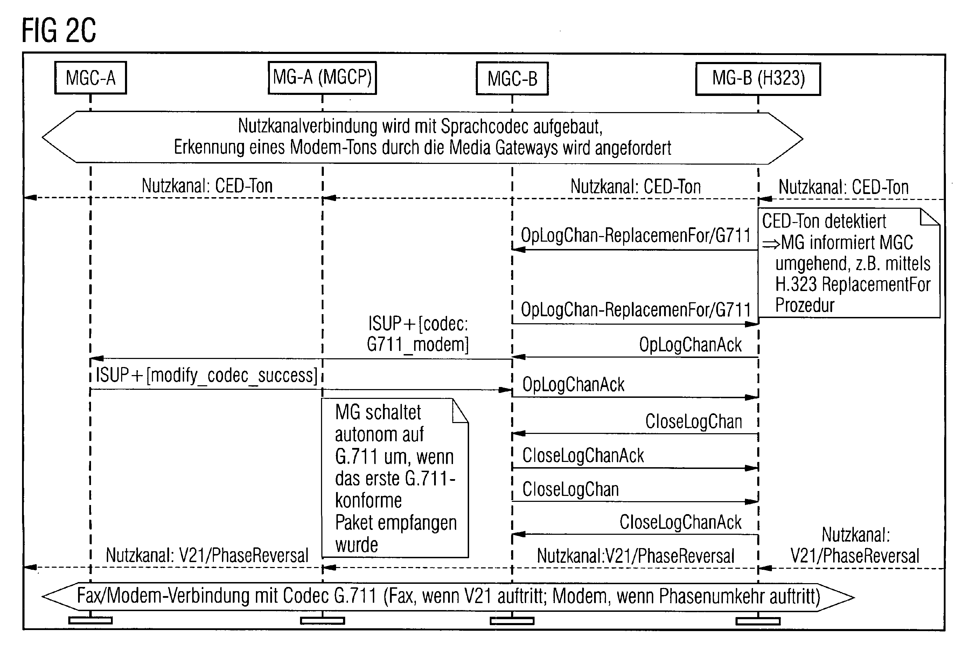

In Figur 2C ist der Signalfluß für den Fall dargestellt, daß ein MGCP-gesteuerter Media Gateway MG-A mit einem H.323-gesteuerten Media Gateway MG-B zusammenwirkt, wobei die Erkennung des Signalisierungstones durch den H.323-gesteuerten Gateway erfolgt.

In allen drei Fällen der Figuren 2A-C wird zunächst eine Nutzkanalverbindung NV mit einem Sprachcodec aufgebaut, der komprimierend ist, um eine optimale Ausnutzung des Übertragungsnetzes zu gewährleisten. Der Modem/Fax-Signalisierungston kann durch beide Media Gateways MG-A, MG-B detektiert und an die entsprechenden Media Gateway Controller MGC-A, MGC-B signalisiert werden.

In Figur 2A, die zwei MGCP-gesteuerte Media Gateways darstellt, detektiert MG-B den Modem/Faxton, auch als CED-Ton bekannt. MG-B informiert MGC-B, der mittels eines geeigneten Signalisierungsprotokolls, beispielsweise ISUP+ oder SIP-T, MGC-A informiert. MG-B wechselt ferner zu einem signalerhaltenden Codec mit höherer Bitrate, beispielsweise G.711.

MG-A detektiert ebenfalls den Modem/Faxton und wechselt ferner zu dem Codec mit höherer Bitrate, ebenfalls beispielsweise G.711. Es ist offensichtlich, daß der zu verwendende nicht-komprimierende Codec netzweit einheitlich ausgewählt werden muß. Im vorliegenden Fall wird einfach netzweit ein geeigneter Codec mit höherer Bitrate festgelegt, es können jedoch auch mehrere Codecs gleichberechtigt vorliegen, von denen einer dann gemäß einem wohlbekannten Verfahren zwischen den Netzelementen ausgehandelt wird.

Die Codecumschaltung in MG-A erfolgt dabei ohne die Steuerung durch MGC-A. Es können Bestätigungsnachrichten ausgetauscht werden.

Anschließend werten die Media Gateways MG-A, MG-B das am Nutzkanal anliegende Signal aus und detektieren, ob eine Phasenumkehr oder ein V.21-Signal vorliegen. Im Falle der Phasenumkehr deaktivieren beide Media-Gateways MG-A, MG-B unabhängig voneinander und ohne Beeinflussung durch die Media Gateway Controller MGC-A, MGC-B die Echosperren.

Damit ist der Verbindungsaufbau erfolgreich abgeschlossen, und über den nunmehr signalerhaltenden Nutzkanal NV kann die Aushandlung des Ende-zu-Ende-Codierverfahrens zwischen den Endgeräten A, B sowie die Datenübertragung erfolgen.

In Figur 2B, die einen H.323-gesteuerten Media Gateway MG-A und einen MGCP-gesteuerten Media Gateway MG-B darstellt, detektiert MG-B den Modem/Faxton. MG-B informiert MGC-B, der mittels eines geeigneten Signalisierungsprotokolls, beispielsweise ISUP+ oder SIP-T, MGC-A informiert. MG-B wechselt ferner zu einem signalerhaltenden Codec mit höherer Bitrate, beispielsweise G.711.

Der H.323-Gateway MG-A ist nicht in der Lage, autonom zu dem Codec mit höherer Bitrate zu wechseln. Vielmehr signalisiert MGC-A an MG-A den Codecwechsel für den Nutzkanal und signalisiert nach erfolgter Umschaltung die erfolgreiche Umschaltung an MGC-B.

Anschließend werten die Media Gateways MG-A, MG-B das am Nutzkanal anliegende Signal aus und detektieren, ob eine Phasenumkehr oder ein V.21-Signal vorliegt.

Damit ist der Verbindungsaufbau erfolgreich abgeschlossen, und über den nunmehr signalerhaltenden Nutzkanal NV kann die Aushandlung des Ende-zu-Ende-Codierverfahrens zwischen den Endgeräten A, B sowie die Datenübertragung erfolgen.

In Figur 2C, die einen MGCP-gesteuerten Media Gateway MG-A und einen H.323-gesteuerten Media Gateway MG-B darstellt, detektiert der H.323-Gateway MG-B den Modem/Faxton. MG-B informiert MGC-B, beispielsweise mit der H.323 "ReplacementFor"-Prozedur. MGC-B signalisiert daraufhin an MG-B das Umschalten des Codec, beispielsweise zu G.711.

Anschließend signalisiert MGC-B an MGC-A den erfolgten Codecwechsel des MG-B. Die Umschaltung des MG-A auf den Codec mit höherer Bitrate erfolgt autonom beim Empfang des ersten Pakets, welches konform mit einem in MG-A verfügbaren und erlaubten Codec ist.

Anschließend werten die Media Gateways MG-A, MG-B das am Nutzkanal anliegende Signal aus und detektieren, ob eine Phasenumkehr oder ein V.21-Signal vorliegt.

Damit ist der Verbindungsaufbau erfolgreich abgeschlossen, und über den nunmehr signalerhaltenden Nutzkanal NV kann die Aushandlung des Ende-zu-Ende-Codierverfahrens zwischen den Endgeräten A, B sowie die Datenübertragung erfolgen.

Obwohl die Erfindung vorstehend mit Bezug auf Endgeräte beschrieben wurde, sind auch Situationen von der Erfindung umfaßt, bei denen einer der Netzzugangsknoten oder beide Netzzugangsknoten an einer Grenze des Kommunikationsnetzwerkes N mit einem weiteren Netzwerk angeordnet ist/sind - nicht dargestellt. Dies umfaßt beispielsweise den Fall, in dem ein privates Netzwerk an das Kommunikationsnetz N angeschlossen ist, wobei wiederum beispielsweise dieses private Netzwerk auch Fax- oder Modemgeräte aufweist.

Ein weiterer Anwendungsfall der Erfindung ist gegeben, wenn das dargestellte Kommunikationsnetz N als Transportnetz zwischen zwei (analogen) Netzen dient, und die Aufgabe darin besteht, die Signale zwischen den beiden Netzzugangsknoten, die dann jeweils an einer Grenze des Kommunikationsnetzes N angeordnet sind, möglichst unverfälscht zu übertragen - nicht dargestellt.

## Patentansprüche

1. Verfahren zur Übertragung von modulierten Trägersignalen in paketorientierten Kommunikationsnetzen (N) zwischen einem ersten Gerät (A) und einem zweiten Gerät (B),
- wobei die Geräte (A, B) jeweils mit Netzzugangsknoten (MG-A, MG-B) verbunden sind, wobei die Netzzugangsknoten (MG-A, MG-B) durch Steuerelemente (MGC-A, MGC-B) gesteuert werden,
- wobei zur Übertragung zwischen den Netzzugangsknoten (MG-A, MG-B) zumindest ein signalverfälschendes Codierverfahren und zumindest ein signalerhaltendes Codierverfahren alternativ eingesetzt werden,
- demgemäß in einem ersten Schritt (1) eine Verbindung (NV) zur Übertragung von modulierten Trägersignalen durch das erste Gerät (A) zum zweiten Gerät (B) angefordert wird,
- demgemäß in einem zweiten Schritt (2) durch einen ersten der Netzzugangsknoten (MG-A, MG-B) unmittelbar ansprechend auf das Erkennen eines vom ersten Gerät (A) mit der Verbindungsanforderung übertragenen Signalisierungstones die Verbindungsanforderung zur Übertragung von modulierten Trägersignalen an das dem ersten Netzzugangsknoten (MG-A, MG-B) zugeordnete Steuerelement (MGC-A, MGC-B) signalisiert wird, und
- demgemäß in einem dritten Schritt (3) durch das dem ersten Netzzugangsknoten (MG-A, MG-B) zugeordnete Steuerelement (MGC-A, MGC-B) das signalerhaltende Codierverfahren für die zu erstellende Verbindung (NV) zwischen den Netzzugangsknoten (MG-A, MG-B) ausgewählt und zumindest an den ersten Netzzugangsknoten (MG-A, MG-B) signalisiert wird.

2. Verfahren nach Anspruch 1,
**dadurch gekennzeichnet,**
**daß** durch den ersten Netzzugangsknoten (MG-A, MG-B) anhand des Signalisierungstones die Art des ersten und des zweiten Gerätes (A, B) bestimmt und weitere Eigenschaften der Verbindung (NV) festgelegt werden.

3. Verfahren nach Anspruch 2,
**dadurch gekennzeichnet,**
**daß** der durch den ersten Netzzugangsknoten (MG-A, MG-B) die Phaseninformation des Signalisierungstones ausgewertet werden, um die weiteren Eigenschaften der Verbindung (NV) festzulegen.

4. Verfahren nach Anspruch 3,
**dadurch gekennzeichnet,**
**daß** die weiteren, durch den ersten Netzzugangsknoten (MG-A, MG-B) festzulegenden Eigenschaften die Eigenschaften von auf die Verbindung (NV) bezogenen Echosperren umfassen.

5. Verfahren nach einem der Ansprüche 1 bis 4,
**dadurch gekennzeichnet,**
**daß** die Geräte (A, B) Faxgeräte oder Modems sind.

6. Verfahren nach einem der Ansprüche 1 bis 4,
**dadurch gekennzeichnet,**
**daß** die Geräte (A, B) Netzknoten weiterer Kommunikationsnetze sind.

7. Verfahren nach einem der Ansprüche 1 bis 6,
**dadurch gekennzeichnet,**
**daß** die Netzzugangsknoten (MG-A, MG-B) Media Gateways und die Steuerungselemente (MGC-A, MGC-B) Media Gateway Controller sind.

8. Verfahren nach einem der Ansprüche 1 bis 7,
**dadurch gekennzeichnet,**
**daß** der erste Netzzugangsknoten (MG-A, MG-B) ein gemäß ITU-T H.323 gesteuerter Media Gateway ist.

9. Verfahren nach einem der Ansprüche 1 bis 7,
**dadurch gekennzeichnet,**
**daß** der erste Netzzugangsknoten (MG-A, MG-B) ein gemäß MGCP oder MEGACO gesteuerter Media Gateway ist.

10. Verfahren nach einem der Ansprüche 1 bis 9,
**dadurch gekennzeichnet,**
**daß** der weitere Netzzugangsknoten (MG-A, MG-B) ein gemäß ITU-T H.323 gesteuerter Media Gateway ist.

11. Verfahren nach einem der Ansprüche 1 bis 9,
**dadurch gekennzeichnet,**
**daß** der weitere Netzzugangsknoten (MG-A, MG-B) ein gemäß MGCP oder MEGACO gesteuerter Media Gateway ist.

12. Verfahren nach einem der Ansprüche 1 bis 11,
**dadurch gekennzeichnet,**
**daß** das signalerhaltende Codierverfahren ein Codec gemäß ITU-T G.711 oder G.726 mit Bitrate von 32 kbit/s oder 40 kbit/s ist und das signalverfälschende Codierverfahren zur folgenden Gruppe von Codecs gehört: G.726 mit niedriger Bitrate, G.723.1, G.729.

13. Verfahren nach einem der Ansprüche 1 bis 12,
**dadurch gekennzeichnet,**
**daß** der Signalisierungston ein Ton mit einer Frequenz von 1100 Hz gemäß ITU-T.30 oder ein Ton mit einer Frequenz von 2100 Hz ist.

14. Netzzugangsknoten (MG-A, MG-B) eines paketorientierten Kommunikationsnetzes (N), über den ein Gerät (A, B) Anschluß an das Kommunikationsnetz (N) erhält und der durch ein Steuerelement (MGC-A, MGC-B) gesteuert wird,
- wobei zur Übertragung zwischen dem Netzzugangsknoten (MG-A, MG-B) und dem Kommunikationsnetz (N) zumindest ein signalverfälschendes Codierverfahren und zumindest ein signalerhaltendes Codierverfahren alternativ eingesetzt werden,
- wobei der Netzzugangknoten (MG-A, MG-B) Mittel zum Erkennen einer Verbindungsanforderung des Gerätes (A, B) anhand eines übertragenen Signalisierungstones aufweist,
- wobei der Netzzugangknoten (MG-A, MG-B) Mittel zum unmittelbaren Signalisieren der Verbindungsanforderung zur Übertragung von modulierten Trägersignalen an das Steuerelement (MGC-A, MGC-B) aufweist, und
- wobei der Netzzugangsknoten (MG-A, MG-B) Mittel zum Bestimmen der Art des Gerätes (A, B) anhand des Signalisierungstones und Mittel zum Festlegen von Eigenschaften der Verbindung (NV) aufweist.

15. Netzzugangsknoten (MG-A, MG-B) nach Anspruch 14, der zusätzlich Mittel zum Auswerten von Phaseninformation des Signalisierungstones'aufweist.

16. Netzzugangsknoten (MG-A, MG-B) nach Anspruch 15, der zusätzlich Mittel zum Festlegen der Eigenschaften von auf die Verbindung (NV) bezogenen Echosperren aufweist.

17. Netzzugangsknoten (MG-A, MG-B) nach einem der Ansprüche 14 bis 16,
**dadurch gekennzeichnet,**
**daß** der Netzzugangsknoten (MG-A, MG-B) ein Media Gateway ist.
